(19) Europäisches Patentamt / European Patent Office / Office européen des brevets

(11) **EP 2 937 214 B1**

(12) **EUROPÄISCHE PATENTSCHRIFT**

(45) Veröffentlichungstag und Bekanntmachung des Hinweises auf die Patenterteilung:
**09.02.2022   Patentblatt 2022/06**

(21) Anmeldenummer: **15167035.3**

(22) Anmeldetag: **10.12.2013**

(51) Internationale Patentklassifikation (IPC):
*B32B 7/12* (2006.01)   *B32B 27/08* (2006.01)
*B32B 27/12* (2006.01)   *B32B 27/30* (2006.01)
*B32B 27/32* (2006.01)   *B32B 27/34* (2006.01)
*B32B 1/08* (2006.01)   *F16L 55/165* (2006.01)
*E03F 3/06* (2006.01)

(52) Gemeinsame Patentklassifikation (CPC):
**F16L 55/1656; B32B 1/08; B32B 7/12;**
**B32B 27/08; B32B 27/12; B32B 27/308;**
**B32B 27/32; B32B 27/327; B32B 27/34;**
**F16L 55/1654;** B32B 2250/03; B32B 2250/05;
B32B 2250/24; B32B 2270/00; B32B 2274/00;
(Forts.)

(54) **EINLEGESCHLAUCH FÜR DIE GRABENLOSE KANALSANIERUNG**

INSERTION HOSE FOR TRENCHLESS SEWER REHABILITATION

TUYAU D'INSERTION POUR LA RÉHABILITATION DES ÉGOUTS SANS TRANCHÉE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **10.12.2012   DE 102012112024**
**11.01.2013   DE 102013100272**

(43) Veröffentlichungstag der Anmeldung:
**28.10.2015   Patentblatt 2015/44**

(62) Dokumentnummer(n) der früheren Anmeldung(en) nach Art. 76 EPÜ:
**13196518.8 / 2 740 592**

(73) Patentinhaber: **Buergofol GmbH**
**93354 Siegenburg (DE)**

(72) Erfinder:
• **Stark, Kurt**
**91284 Neuhaus a.d. Pegnitz (DE)**

• **Schleicher, Gregor**
**85049 Ingolstadt (DE)**
• **Boutrid, Abdel-Kader**
**93345 Siegenburg (DE)**

(74) Vertreter: **Canzler & Bergmeier Patentanwälte Partnerschaft mbB**
**Friedrich-Ebert-Straße 84**
**85055 Ingolstadt (DE)**

(56) Entgegenhaltungen:
**EP-A1- 0 592 732        EP-A1- 2 725 277**
**WO-A1-2010/075946    DE-A1-102010 023 764**
**US-A- 4 954 393          US-A1- 2006 048 834**
**US-B1- 6 210 765**

(52) Gemeinsame Patentklassifikation (CPC): (Forts.)
B32B 2597/00; E03F 2003/065

**Beschreibung**

Die Erfindung betrifft einen Einlegeschlauch für die grabenlose Kanalsanierung mittels Schlauchlining-Verfahren.

Die Anwendungsbereiche von Folien erweitern sich ständig. Zu den Einsatzgebieten, bei denen beispielsweise Folien mit Olefin-Homo- oder Copolymeren verwendet werden, gehört auch das Schlauchlining-Verfahren für die grabenlose Kanalrohrsanierung. Hierbei weist ein Schlauchliner (auch Einlegeschlauch oder nur Liner genannt) beim System Glasfaser-Schlauchliner mit UV- oder Dampfhärtung üblicherweise einen inneren und einen äußeren Schlauch auf, zwischen denen das Glasfaser-Trägermaterial eingebracht ist, welches mit reaktivem Kunststoffharz getränkt ist. Als reaktives Kunststoffharz kommen zum Beispiel handelsübliche UP-Harze (Polyester- bzw. ungesättigte Polyesterharze), VE-Harze (Vinylesterharze) oder EP-Harze (EpoxidHarze) zum Einsatz. Die Härtung der Harze erfolgt bei UP- oder VE-Harzen zum Beispiel mit Hilfe von Photoinitiatoren. Die Härtung kann aber auch thermisch erfolgen.

Der Einlegeschlauch bzw. Schlauchliner wird im Rohr bis zum Anliegen an eine Außenwand aufgeblasen, um anschließend das Harz - beispielsweise mittels UV-Licht aus einer langsam durch das Rohr gezogenen UV-Lichtquelle - auszuhärten. Zum Schluss wird die innere Folie des Einlegeschlauchs abgezogen und entfernt. Die Schicht mit dem Trägermaterial ist dann den durch das Rohr zu leitenden Substanzen exponiert.

Häufig wird der Schlauchliner - insbesondere beim System Synthesefaser-Schlauchliner mit Warmwasser- oder Dampfhärtung - nicht in direkten Kontakt mit der Rohrinnenwand gebracht. Vielmehr wird in das zu sanierende Rohr ein Preliner (auch Preliner-Folie genannt), d.h. eine dickwandige, das Rohr vollständig auskleidende Folie, bekanntermaßen aus PE mit einer hohen Dichte (HDPE - High Density Polyethylene), eingebracht, welcher an der Innenwand des Rohres angelegt wird. Anschließend wird der Schlauchliner in das Rohr eingezogen (Einzugsverfahren) oder invertiert (Inversionsverfahren). Der Preliner verhindert zum Beispiel eine Verklebung des Kunstharzes des Schlauchliners mit der Kanalwand und einen Kontakt des noch nicht gehärteten Harzes mit Schmutz und Wasser. Ferner verhindert die Preliner-Folie auch das Austreten von Harz aus dem Kanalsanierungssystem sowie die Kontamination von Erdreich und Grundwasser. Durch die Preliner-Folie werden außerdem die Zuläufe vor eindringendem Überschuss-Harz geschützt, so dass sich keine Harzpfropfen und Verstopfungen bilden können.

Auch kann ein Preliner beim Einzugsverfahren eine ähnliche Funktion wie bekannte Gleitfolien für den einzuziehenden Schlauchliner haben. In diesem Fall kommt es auf niedrige Reibungskoeffizienten zwischen der Gleitfolie und der Außenfolie des Schlauchliners an. Hierdurch wird der Einlegeschlauch bzw. Schlauchliner beim Einziehen in das Rohr nicht durch die Rohrinnenwand bzw. Gegenstände im Rohr beschädigt, andererseits ist die Reibung zwischen Schlauchliner und Gleitfolie sehr niedrig und erleichtert ein Einziehen des Schlauchliners.

Eine bekanntermaßen häufig eingesetzte Preliner-Folie ist unter dem Markennamen Valeron® bekannt. Die sehr große mechanische Stabilität dieser Folie entsteht durch die Querverbindung von zwei gereckten, senkrecht zueinander verlaufenden HDPE-Schichten. Durch das Recken verliert die Folie ihre Dehnfähigkeit, wodurch sie ihre bessere Reißfestigkeit erhält. Die beiden quer verlaufenden Schichten sorgen dafür, dass die Folie in allen Richtungen gleich widerstandsfähig und insbesondere sehr reiß- und durchstoßfest ist. Zudem breitet sich ein Loch oder ein einmal entstandener Riss aufgrund des Schichtaufbaus nicht weiter aus, da die verringerte Foliendehnung auch eine hohe Durchstoßfestigkeit bedingt.

Nachteilig bei der genannten, als Preliner häufig verwendeten Valeron-HDPE-Folie ist unter anderem, dass sie aufgrund ihrer sehr hohen Eigensteifigkeit nicht ohne Probleme im Rahmen des Inversionsverfahrens umgestülpt werden kann. Zudem ist die Valeron-Folie herstellungsbedingt nicht in Schlauchform erhältlich, so dass sie gesiegelt werden muss. Da aber die Schichten der Folie orientiert und gereckt sind, ist die Siegelfähigkeit der Folie stark eingeschränkt. Aus diesem Grund benötigt man zur Siegelung der Valeron-Folie einen unerwünschten thermisch aktivierbaren Kleber (z. B. Hotmelt). Dabei überlappt die Folie an der zu siegelnden Fläche ca. 3 bis 5 cm, so dass sich die Naht bzw. die Überlappung der Folie an dieser Stelle bei der Inversion sehr störend auswirkt. Nachteilig ist bei einer derartigen Siegelung zudem nicht nur der weitere, mit Kosten verbundene Produktionsschritt, sondern insbesondere die Gefahr, dass die Siegelnaht undicht ist. Daher kann bei unvollständiger Siegelung von außen Wasser durch die Preliner-Folie eindringen, wodurch die Härtung des Harzes sehr beeinträchtigt wird. Ein weiterer Nachteil der Valeron-Folie ist ihre hohe Affinität zu den verwendeten Harzen, die sich in einer deutlichen Harzhaftung äußert. Dadurch wird das Inversieren des Schlauchliners, zum Beispiel beim System Synthesefaser-Schlauchliner, bei dem die mit Harz getränkte Seite zum Preliner kommt, sehr erschwert. Schließlich besitzt die Valeron-Folie praktisch keine Barrierewirkung gegen die beim Harz verwendeten Monomere und Öle. Somit kann eine Migration von schädlichen Stoffen in das Grundwasser nicht vermieden werden.

Aus der nachveröffentlichten EP 2 725 277 A1 ist ein Einlegeschlauch bekannt, dessen Schlauchinnenfolie einen dreischichtigen Aufbau mit zwei Außenschichten auf der Basis von Polyamid und einer Kernschicht aus thermoplastischem Elastomer aufweist. DE 10 2010 023764 A1 offenbart ein Einlegeschlauch, umfassend eine Schlauchinnenfolie in Form einer Mehrschichtfolie, eine als Schlauchfolie ausgebildete Außenfolie, sowie ein zwischen diesen beiden Schlauchfolien angeordnetes und mit einem reaktiven Kunststoffharz getränktes Trägermaterial, wobei die Schlauchinnenfolie mindestens eine Schicht aus ein Homo- oder Copolyamid und mindestens eine Schicht aus ein thermoplastisches, gegebenenfalls modifiziertes, Olefin-Homo- oder Copolymer enthält.

Es ist Aufgabe der vorliegenden Erfindung, eine Folie in einem Einlegeschlauch zur Verfügung zu stellen, welche hohen Anforderungen hinsichtlich ihrer mechanischen Stabilität bei gleichzeitig hoher Flexibilität genügt. Zudem soll es möglich sein, eine solche Folie ohne Naht zur Verfügung zu stellen, vorzugsweise in einer Schlauchform, damit eine Sollbruchstelle in Form einer Naht vermieden werden kann. Dabei ist die Affinität der Folie zu den verwendeten Harzen und insbesondere deren Harzhaftung weitestgehend einzuschränken. Überdies soll eine Folie zur Verfügung gestellt werden, die eine hohe Barrierewirkung gegen Monomere und Öle aufweist.

Diese Aufgabe wird durch einen Einlegeschlauch gemäß Anspruch 1 gelöst. Die erfindungsgemäße Schlauchinnenfolie des Einlegeschlauchs weist mindestens eine - vorzugsweise eine der Außenschichten der Folie bildende - Schicht (a) auf, die mindestens ein Homo- oder Copolyamid (Abkürzung im Folgenden: PA) mit einem prozentualen Gewichtsanteil von mehr als 25 Gew.-% enthält. Zudem weist die erfindungsgemäße Folie mindestens eine Schicht (c) auf, die mindestens ein thermoplastisches Elastomer enthält. Weiterhin weist die erfindungsgemäße Schlauchinnenfolie mindestens eine weitere Schicht (b) auf, wobei diese weitere Schicht (c) mindestens ein thermoplastisches, gegebenenfalls modifiziertes, Olefin-Homo- oder Copolymer enthält.

Die Vorteile der Erfindung sind insbesondere darin zu sehen, dass erfindungsgemäße Schlauchinnenfolien gute mechanische Eigenschaften wie Robustheit, Widerstandsfähigkeit, Durchstoßfestigkeit bei relativ geringer Eigensteifigkeit aufweisen. Auch können erfindungsgemäße nicht-gesiegelte Schlauchinnenfolien realisiert werden, die sich beispielsweise während der grabenlosen Kanalsanierung beim Inversionsverfahren sehr gut umstülpen lassen sowie eine sehr hohe Dichtigkeit gegenüber Wassereintritt bzw. Monomeraustritt aus dem Harz eines Einlegeschlauchs bzw. Schlauchliners aufweisen. Die erfindungsgemäßen Schlauchinnenfolien verfügen insgesamt über eine hervorragende Barriere gegenüber Monomeren und Ölen. Zudem ist die Haftung zum Harz deutlich eingeschränkt.

Unter dem Begriff "Schlauchfolie" wird im Sinne dieser Erfindung eine durch (Co)-Extrusion, vorzugsweise durch Blasfolien-(Co)-Extrusion, hergestellte Mehrschichtfolie verstanden, die keine Siegelnaht aufweist.

Die erfindungsgemäße mehrschichtige Schlauchinnenfolie enthält wenigstens eine Polyamid-Schicht mit mehr als 25 Gew.-%. Dies kann ein Homo- und/oder Copolyamid sein oder Mischungen unterschiedlicher Polyamide. Geeignete Homo- oder Copolyamide sind vorzugsweise ausgewählt aus der Gruppe thermoplastische aliphatische, teilaromatische oder aromatische Homo- oder Copolyamide. Diese Homo- oder Copolyamide können aus Diaminen, wie aliphatischen Diaminen mit 2-20 Kohlenstoffatomen, insbesondere Hexamethylendiamin und/oder aromatischen Diaminen mit 6-10 Kohlenstoffatomen, insbesondere p-Phenylendiamin, und aus aliphatischen oder aromatischen Dicarbonsäuren mit 6-20 Kohlenstoffatomen, wie z.B. Adipinsäure, Terephthalsäure oder Isoterephthalsäure, hergestellt werden. Weiterhin können Homo- oder Copolyamide aus Lactamen mit 4-20 Kohlenstoffatomen, wie z.B. aus ε-Caprolactam, hergestellt werden. Erfindungsgemäß zum Einsatz kommende Polyamide sind vorzugsweise PA 6, PA 666, PA 12, PA 11, PA 66, PA 610, PA 612, PA 6I, PA 6T oder entsprechende Copolymere oder Mischungen aus wenigstens zwei der genannten Polyamide. Vorzugsweise enthält die mindestens eine Schicht (a) der erfindungsgemäßen Schlauchinnenfolie mehr als 50 Gew.-%, vorzugsweise mehr als 75 Gew.-%, bevorzugt mehr als 95% Gew.-% und ganz besonders bevorzugt im Wesentlichen bzw. ca. (d.h. nahezu oder vollständig) 100 Gew.-% Homo- oder Copolyamid.

Die mindestens eine Schicht (b) enthält vorzugsweise mehr als 20 Gew.-%, besonders bevorzugt mehr als 40 Gew.-% und bis zu 100 Gew.-% thermoplastisches Olefin-Homo- oder Copolymer.

Olefin-Homo- oder Copolymere im Sinne der vorliegenden Erfindung sind thermoplastische Polymere von α,ß-ungesättigten Olefinen mit zwei bis sechs Kohlenstoffatomen, wie z.B. Polyethylen (PE, insbesondere LDPE oder HDPE), Polypropylen (PP), Polybutylen (PB), Polyisobutylen (PI) oder Mischungen aus wenigstens zwei der genannten Polymere. Mit "LDPE" wird Polyethylen niedriger Dichte bezeichnet, welches eine Dichte im Bereich von 0,86-0,93 g/cm$^3$ aufweist und sich durch einen hohen Verzweigungsgrad der Moleküle auszeichnet. Mit "HDPE" wird Polyethylen hoher Dichte bezeichnet, welches nur eine geringe Verzweigung der Molekülketten aufweist, wobei die Dichte im Bereich zwischen 0,94-0,97 g/cm$^3$ liegen kann.

Das Olefin-Homo- oder Copolymer ist bevorzugt Polyethylen (PE). Dieses wird vorzugsweise in Form von High Density Polyethylen (HDPE) verwendet. Auch LDPE und/oder LLDPE (Linear Low Density Polyethylene) sind mit Vorteil einsetzbar. Ferner eignen sich Polyolefine, insbesondere Polyethylene, die auf Basis von Metallocen-Katalysatoren polymerisiert wurden (mPE), wie mLDPE (metallocen LDPE) und mLLDPE (metallocen LLDPE). Polyethylen ist in unterschiedliche Kategorien klassiert, hauptsächlich in Bezug auf ihre Dichte und Verzweigung. Seine mechanischen Eigenschaften hängen in bedeutendem Maße von Variablen wie der Länge und der Art der Verzweigung, der Kristallstruktur und dem Molekulargewicht ab. Die meistverkauften Polyethylene sind HDPE, LLDPE und LDPE. Im Speziellen sieht die Reihenfolge wie folgt aus (englische Schreibweise der Polymere):

- Ultra-high Molecular Weight Polyethylene (UHMWPE)
- Ultra Low Molecular Weight Polyethylene (ULMWPE oder PE-WAX)
- High Molecular Weight Polyethylene (HMWPE)

○ High Density Polyethylene (HDPE)
○ High Density Cross-linked Polyethylene (HDXLPE)
○ Cross-linked Polyethylene (PEX or XLPE)
○ Medium-density Polyethylene (MDPE)
○ Linear Low Density Polyethylene (LLDPE)
○ Low Density Polyethylene (LDPE)
○ Very Low Density Polyethylene (VLDPE)
○ Chlorinated Polyethylene (CPE)

VLDPE (Very Low Density Polyethylene) ist durch einen Dichtebereich von 0,880 - 0,915 g/cm$^3$ definiert. Es ist im Wesentlichen ein lineares Polymer mit einem hohen Anteil an kurzen Seitenketten, üblicherweise hergestellt durch lineare Copolymerisation von Ethylen mit kurzkettigen Alpha-Olefinen (z.B. 1-Buten, 1-Hexen, und 1-Okten). VLDPE wird sehr häufig unter Verwendung von Metallocen-Katalysatoren hergestellt, weil durch diese Katalysatoren mehr Co-Monomere eingebaut werden können.

Gemäß einer anderen vorteilhaften Alternative findet als Olefin-Homo- oder Copolymer Polypropylen (PP) Verwendung.

Mischungen von verschiedenen, einschließlich der oben aufgezählten, Olefin-Homo- oder Copolymeren in der besagten mindestens einen Schicht (b) sind ohne Weiteres möglich.

Die mindestens eine Schicht (c) der Schlauchinnenfolie enthält vorzugsweise mehr als 20 Gew.-%, besonders bevorzugt mehr als 40 Gew.-% und bis zu 100 Gew.-% thermoplastisches Elastomer (TPE).

Die mindestens eine Schicht (c) enthält als thermoplastisches Elastomer (TPE) gemäß einer bevorzugten Ausführungsform thermoplastisches Polyurethan (TPU), also ein thermoplastisches Elastomer auf Urethanbasis (auch als TPE-U bezeichnet). Beispiele hierfür sind Desmopan, Texin und Utechllan von Bayer. Weitere Beispiele sind die Produkte, die unter den Handelsnamen Elastollan, Estane, Morthane, Pellethane, Pearlthane, Skythane oder Tecoflex erhältlich sind.

Mit Vorteil können auch andere TPE-Substanzen eingesetzt werden, wobei

- neben TPU bzw. TPE-U - folgende Gruppen unterschieden werden:

• TPE-O oder TPO = Thermoplastische Elastomere auf Olefinbasis, vorwiegend PP/EPDM, z. B. Santoprene von AES/Monsanto;
• TPE-V oder TPV = Vernetzte thermoplastische Elastomere auf Olefinbasis, vorwiegend PP/EPDM, z. B. Sarlink von Teknor Apex, Forprene von SoFter;
• TPE-E oder TPC = Thermoplastische Polyesterelastomere / Thermoplastische Copolyester, z. B. Hytrel von DuPont oder Riteflex von Ticona;
• TPE-S oder TPS = Styrol-Blockcopolymere (SBS, SEBS, SEPS, SEEPS und MBS), z. B. Styroflex von BASF, Septon von Kuraray oder Thermolast von Kraiburg TPE;
• TPE-A oder TPA = Thermoplastische Copolyamide, z. B. PEBAX von Arkema.

Auch ist TPE-Silikon verwendbar, das beispielsweise von Wacker unter dem Handelsnamen Geniomer erhältlich ist. Geniomer ® ist ein Copolymer aus Polydimethylsiloxan und Harnstoff und verbindet die guten Verarbeitungseigenschaften eines organischen Thermoplasts mit einigen typischen Siliconeigenschaften. Geniomer® weist somit ein Eigenschaftsprofil auf, das in dieser Form bislang weder bei Thermoplasten noch bei Siliconen realisierbar war.

Die TPE-Schicht gemäß Anspruch 1 kann insbesondere aufgebaut sein, wie jede der in der EP 1 145 847 A1 beschriebenen drei Schichten (1), (2) und (3).

Vorzugsweise weist die erfindungsgemäße Schlauchinnenfolie mindestens eine weitere als Haftvermittlerschicht (d) ausgebildete Schicht auf (Abkürzung: HV). Diese Haftvermittlerschicht (d) kann - je nach Vorhandensein der verschiedenen Schichten und je nach Ausführungsbeispiel - zwischen zwei Schichten (a), zwischen einer Schicht (a) und einer Schicht (b), zwischen zwei Schichten (b), zwischen einer Schicht (a) und einer Schicht (c), zwischen einer Schicht (b) und einer Schicht (c), oder zwischen zwei Schichten (c) angeordnet sein. Zur Herstellung der genannten Haftvermittlerschicht(en) können übliche Haftvermittler eingesetzt werden. Vorzugsweise basiert/basieren die Haftvermittlerschicht(en) jeweils unabhängig voneinander auf wenigstens einem modifizierten thermoplastischen Polymer, vorzugsweise auf wenigstens einem modifizierten Olefin-Homo- oder Copolymer. Als Olefin-Homo- oder Copolymere können dabei dieselben Olefin-Homo- oder Copolymere eingesetzt werden, die oben bereits genannt wurden, nur dass diese modifiziert sind. Besonders bevorzugt basiert/basieren die Haftvermittlerschicht(en) jeweils unabhängig voneinander auf wenigstens einem modifizierten Ethylen-Homo- oder Copolymer und/oder wenigstens einem modifizierten Propylen-Homo- oder Copolymer, welches mit wenigstens einer organischen Säure oder wenigstens einem vorzugsweise zyklischen organischen Säureanhydrid, vorzugsweise mit Maleinsäureanhydrid, modifiziert ist. Auch Ethylen-Vinylacetat-, Ethylen-Vinylalkohol- (EVOH) und Ethylen-(Meth)acrylat-Copolymere, in ihrer modifizierten oder nicht modifizierten Form, eignen sich bestens als Haftvermittler.

Die Haftvermittlerschicht(en) der erfindungsgemäßen Mehrschichtfolie weist/weisen vorzugsweise jeweils unabhängig voneinander eine Schichtdicke von 1 $\mu$m bis 30 $\mu$m, besonders bevorzugt von 2 $\mu$m bis 20 $\mu$m, auf.

Bei einer vorteilhaften Ausführungsform der erfindungsgemäßen Schlauchinnenfolie sind beide Außenschichten als Schicht (a) ausgebildet, wobei diese beiden Außenschichten demnach jeweils mindestens ein Homo- oder Copolyamid mit einem prozentualen Gewichtsanteil von mehr als 25 Gew.-% enthalten.

Besonders bevorzugt sind Polymere in der Schlauchinnenfolie durch Bestrahlung mit Beta- oder Gammastrahlen vernetzt. Eine Strahlenvernetzung kann typisch eingesetzten Kunststoffen die mechanischen, thermischen und chemischen Eigenschaften von Hochleistungskunststoffen verleihen. Die hierbei eingesetzten Beta- oder Gammastrahlen lösen vernetzende Reaktionen in den Polymeren aus. Die Vernetzung ist möglich bei Olefin-Homo- oder Copolymeren, Homo- oder Copolyamiden und auch bei thermoplastischen Elastomeren. Die Strahlenvernetzung ist einfach, kostengünstig und flexibel. Die Beschleunigungsspannung kann zwischen 25 und 25 kV liegen, während die Intensität zwischen 5 und 500 kGy betragen kann. Die Eindringtiefe liegt bei mindestens 1 $\mu$m, wobei auch Folien und Folienverbunde in ihrer gesamten-Dicke durchdrungen werden können.

Eine Strahlenvernetzung kann hierbei zwischen Polymeren innerhalb einer Schicht und/oder zwischen Polymeren zweier angrenzenden Schichten, was zu einem stärkeren Verbund zwischen diesen Schichten führt, realisiert werden.

Die an sich bekannte Technik zur Vernetzung von Folien mittels Elektronenbestrahlung ($\beta^-$-Strahlung) ist beispielsweise im Artikel "Electron Beam Technology for Converting Applications" von Stephen C. Lapin, Radtech Report; 23, 5; S. 44-47; 2009 beschrieben. Auch unter *www.bgs.eu/strahlenvernetzung.html* der Firma BGS Beta-Gamma-Service GmbH & Co. KG und *www.ebeam.com/markets.php?.section=cross* der Firma Energy Sciences Inc., Wilmington, MA, USA, sind diverse Informationen zur Strahlenvernetzung aufgeführt. Der Inhalt dieser Dokumente wird explizit in die vorliegende Offenbarung miteinbezogen.

Die erfindungsgemäße Schlauchinnenfolie weist gemäß einer vorteilhaften Ausführungsform eine Dicke von 20 bis 2000 $\mu$m auf, vorzugsweise von 40 bis 1000 $\mu$m, besonders bevorzugt von 60 bis 400 $\mu$m und insbesondere von 80 bis 250 $\mu$m auf.

Gemäß einer bevorzugten Ausführungsform enthält die mindestens eine ein Olefin-Homo- oder Copolymer enthaltende Schicht (b) der erfindungsgemäßen Schlauchinnenfolie und/oder eine als Haftvermittlerschicht vorgesehene Schicht (d) (falls vorhanden) mindestens ein Ethylen-(Meth)Acrylat-Copolymer in funktionalisierter oder nicht-funktionalisierter Form. Der prozentuale Gewichtsanteil des mindestens einen Ethylen-(Meth)Acrylat-Copolymers liegt hierbei vorzugsweise im Bereich von 0,1 bis 100% und bevorzugt bei mindestens 30 Gew.-%. Hierdurch kann eine noch bessere Dehnbarkeit bis zum Folienspleiß bzw. bis zum Platzen der Folie erreicht werden.

Vorzugsweise enthält die erfindungsgemäße Schlauchinnenfolie -je nach Anwendungsfall - einen oder mehrere der folgenden Stoffe in mindestens einer der Folienschichten: Polystyrol (PS); Polyhalogenide, wie z.B. PVC und/oder Polyvinylidenchlorid (PVdC); Ethylenvinylalkohol-Copolymer (EVOH), Polyvinylalkohol (PVOH oder PVAL), Haftvermittler, Ethylenvinylacetat (EVAc); ein oder mehrere Ionomere; ein oder mehrere Poly(Meth)acrylate; Ethylen-haltige Poly(meth)acrylate, Polyvinylacetat (PVAc); Polycarbonat (PC); Polyacrylnitril (PAN); weitere Polyester wie Polybutylenterephthalat (PBT), Polyethylennaphthalat (PEN), Polymilchsäure (PLA) und/oder Polyhydroxyalkanoate (PHA); ein oder mehrere Ethylenacrylsäure-Copolymere (EAA); Polyvinylbutyral (PVB); Polyvinylacetal; Celluloseacetat (CA); Celloloseacetobutyrat (CAB); Polysaccharide; Stärke; zyklisches Olefin-Copolymer (COC).

Zur Verbesserung der Folieneigenschaften können folgende Stoffe bzw. Additive im Zuge der Extrusion in einer oder in mehreren Schichten eingesetzt werden. Als Additive werden zum Beispiel Haftvermittler, funktionalisierte Polymere wie z.B. EVOH, optische Aufheller, thermische Stabilisatoren, Gleitmittel, Antioxidantien, Oxygen scavenger, Abstandshalter (z.B. Silica-Partikel, SAS), Slip-/Antiblockmittel, Farben, Pigmente, Schäumungsmittel, Antistatika, Prozesshilfsmittel, Lubricating Agents, Flammschutzmittel, Flammhemmer, Impact Modifier, Schlagzähverbesserer, Anti-Hydrolysemittel, UV-Absorber, UV-Schutzmittel, Stabilisatoren, Antifog-Additive, Wachse, Wachsadditive, Trennmittel, Siegel- oder Peel-Additive, Nukleierungsmittel, Combatibilizer (Verträglichkeitsmacher), Fließmittel, Fließverbesserer, Melt Strength Enhancer, Molekulargewichtserhöher, Vernetzer oder Weichmacher zugesetzt.

Die erfindungsgemäßen Schlauchinnenfolien lassen sich auf unterschiedliche Weise herstellen. Eine bevorzugte Herstellung wird mittels Extrusion bzw. Coextrusion realisiert, beispielsweise durch Blasextrusion oder Cast-Extrusion. Am meisten bevorzugt ist die Herstellung als schlauchförmige Blasfolie.

Vorzugsweise ist die erfindungsgemäße Schlauchinnenfolie nicht orientiert. Weiterhin ist sie bevorzugt siegelfähig, obwohl sie keine Siegelnaht aufweist.

Die Schlauchinnenfolie ohne Siegelnaht wird erfindungsgemäß in einem Einlegeschlauch bei der Rohrsanierung mittels Schlauchlining-Technik eingesetzt. Die erfindungsgemäße Folie kommt demnach für die grabenlose Kanalsanierung in Frage und zwar als - vorzugsweise mittels Strahlenvernetzung vorbehandelte - Schlauchinnenfolie eines Schlauchliners.

Eine zusätzlich eingebaute Gleitfolie wird häufig verwendet, um den GFK-Schlauchliner vor Beschädigungen während des Einbringens zu schützen und die Reibungskräfte zu minimieren.

Die möglichen Einsatztechniken bei den genannten Einbringverfahren sind sowohl das Inversieren des Schlauchliners als auch dessen Einziehen sowie die thermische wie auch die Härtung mittels UV-Strahlung der Harze des Schlauchliners. Unter dem Begriff "UV-Strahlung" wird im Rahmen dieser Erfindung elektromagnetische Strahlung in einem Wellenlängenbereich von 200 bis 400 nm verstanden. Die erfindungsgemäße Mehrschichtfolie ist in einer bestimmten Ausführungsform zur Verwendung als Schlauchinnenfolie eines Schlauchliners zumindest teilweise durchlässig für UV-Strahlung, vorzugsweise zu wenigstens 80%, besonders bevorzugt zu wenigstens 90%. Bei Ausbildung der erfindungsgemäßen Schlauchfolie als Schlauchinnenfolie ist diese Folie vorzugsweise mit einer wie oben beschriebenen Strahlenvernetzung behandelt worden, um ihre mechanischen und thermischen Eigenschaften weiter zu verbessen.

Die Erfindung betrifft gleichfalls ein Schlauchlining-System, welches einen Preliner oder eine Gleitfolie sowie einen Schlauchliner umfasst, wobei der Schlauchliner eine Schlauchinnenfolie in Form einer erfindungsgemäßen, vorzugsweise mit Beta- oder Gammastrahlung vernetzten Mehrschichtfolie, eine als Schlauchfolie ausgebildete Außenfolie, die vorteilhafterweise UV-Strahlung absorbiert und/oder reflektiert und die zur Anlage an einem Preliner oder einer Gleitfolie vorgesehen ist, sowie ein zwischen diesen beiden Schlauchfolien angeordnetes und mit einem reaktiven Kunststoffharz getränktes Trägermaterial (z.B. Glasfasergewebe, Filze, Vliese, Textilien), das nach der Aushärtung das sanierte Kanalinnenrohr bildet, umfasst. Nach der Aushärtung des Harzes kann bei bestimmten Ausführungen die erfindungsgemäße Schlauchinnenfolie abgezogen werden. Die Preliner- oder Gleitfolie wird im sanierten Rohr belassen. Gemäß einer vorteilhaften Ausführungsform weisen die Schlauchinnenfolie, vorzugsweise mittels Strahlenvernetzung vorbehandelt, einerseits sowie der Preliner bzw. die Gleitfolie andererseits den gleichen erfindungsgemäßen Schichtaufbau auf.

Die erfindungsgemäße Schlauchinnenfolie kann auch geschäumt werden oder mindestens eine geschäumte Schicht enthalten.

Die Schlauchinnenfolie kann ferner auf der oder den Oberfläche/n noch mit einem Pulver oder Puder versehen werden. Bevorzugt wird dazu beispielsweise Talkum eingesetzt.

In dem vorgenannten Zusammenhang ist ebenfalls zu beachten, dass bevorzugt der Reibwert eines Preliners gegenüber der Außenfolie des Einlegeschlauchs (Schlauchliners), der in den zu sanierenden Kanal mit Hilfe der Gleitfolie bzw. des Preliners eingeführt wird, klein ist. Gemäß einer diesbezüglich vorteilhaften Ausführungsform lässt sich eine Verringerung des Reibungskoeffizienten (COF) mit Wachsadditiven, beispielsweise Ethylen-bisstearamid (EBS), Erucasäureamid (ESA), etc. sowie mit Trennmitteln erreichen. Diese Wachsadditive bzw. Trennmittel werden bevorzugt auf die der Außenfolie des Schlauchliners zugewandten Oberfläche der Gleitfolie appliziert.

Auch ist eine Extrusionsbeschichtung möglich, ebenso wie ein Glättwerkprozess. Des Weiteren sind Laminierungstechniken einsetzbar.

Des Weiteren ist es vorteilhafterweise möglich, die erfindungsgemäße Schlauchinnenfolie mit einem Non-Woven-Material, Textil, Nadelfilz, Synthesefasern oder Vlies zu kaschieren, wobei eine Thermokaschierung oder Kleberkaschierung zum Einsatz kommen kann.

Die erfindungsgemäße Schlauchinnenfolie kann auch nachträglich noch gereckt oder geprägt werden. Auch ist eine Bedruckung möglich.

Die Strukturierung der Folienoberfläche kann zudem durch Aufgießen auf eine entsprechend strukturierte Walze erfolgen.

Gemäß einer vorteilhaften Ausführungsform wird die Schlauchinnenfolienoberfläche durch Zugabe von Abstandshaltern (Antiblockmittel) aufgeraut, beispielsweise durch Ansetzen eines Batches mit gröberen Partikeln mit einem Durchmesser von 0,01 bis 10 $\mu$m. Beispielsweise werden hierzu Silica-Partikel in mindestens einer der Außenschichten verwendet. Hierdurch wird eine Adhäsion zwischen der Gleitfolie bzw. dem Preliner und dem Einlegeschlauch bzw. Schlauchliner verhindert.

Weitere Verarbeitungsmöglichkeiten bestehen in einem Zusammenbringen der erfindungsgemäßen Schlauchinnenfolie mit einem Gelege oder Gewirke, z.B. einem Kunststoffnetz oder einem Gitter. Alternativ kann dieses Gitter, Gelege bzw. Gewirke in die Schlauchinnenfolie zum Zwecke der weiteren Verstärkung mit eingebracht werden.

## Ausführungsbeispiele:

Die nachfolgenden Beispiele und Vergleichsbeispiele dienen zur Erläuterung der Erfindung.

## I. Chemische Charakterisierung der eingesetzten Rohstoffe

Als Polyamide (PA) für die mindestens eine Schicht (a) sind einsetzbar handelsübliche Polyamide (jeweilige Markennamen in Klammern) der Firmen BASF (Ultramid), Lanxess (Durethan), DuPont (Zytel), DSM Engineering Plastics (Akulon, Stanyl), EMS-Chemie (Grilamid, Grivory, Grilon), Evonik (Vestamid, Trogamid), Radici (Radilon, Radiflam, Raditer, Heraform, Heraflex), Rhodia (Technyl, Stabamid), UBE, DSM (Novamid), Atofina (Rilsan). Bei dem im Folgenden vorgestellten Beispiel wurde als Polyamid-Schicht eine reine PA-Schicht Durethan C38F (Lanxess) verwendet.

Als Haftvermittler wurde Admer AT1955E der Firma Mitsui verwendet. Admer®-Substanzen sind PE-Copolymere mit Maleinsäureanhydrid-Gruppen (MSA-Gruppen), die eine große Adhäsion zu PET, EVOH und PA besitzen, während sie sehr gut verarbeitbar sind und eine thermische Stabilität aufweisen, die äquivalent zu gewöhnlichem PE ist.

Typische einsetzbare Polyolefine sind beispielsweise Lupolen 2420 F, das ein LDPE der Firma LyondellBasell Polymers ist, und Exceed 1327 CA der Firma ExxonMobil Chemical Company, das ein mittels Metallocen-Katalyse hergestelltes Ethylen-Copolymer ist, bei dessen Polymerisation neben Ethylen Hexen als weiteres Co-Monomer eingesetzt wird.

## II. Herstellung der Mehrschichtfolien

Die erfindungsgemäße Mehrschichtfolie des Beispiels B11 besteht aus fünf Schichten. Die einzelnen Schichten der Mehrschichtfolien grenzen jeweils in der Reihenfolge unmittelbar aneinander an, in der sie nachstehend aufgeführt sind ("Schichtnummer"). Die erfindungsgemäßen Schlauchfolien wurden mittels Blasfolien-Co-Extrusion hergestellt.

Als thermoplastisches Elastomer wurde Pearlthane Clear 15N80 von MER-QUINSA verwendet, das auf einem TPU Polyether-Copolymer basiert und eine Shore-Härte 82 A (nach ASTM D-2240) aufweist.

Die Folie des Vergleichsbeispiels V1 war eine handelsübliche Valeron ®-Folie mit einer Dicke von 108 $\mu$m der Firma Valeron Strength Films. Valeron-Folien können nur als Flachfolie hergestellt werden. Durch Aufbringen eines dünnen Streifens mit Hotmelt wurde die Folie zu einem Schlauch verschweißt.

Die Folie des Vergleichsbeispiels V2 war eine 110 $\mu$m dicke einschichtige LDPE-Folie in Schlauchform mit einem PE-Schmelzpunkt von 111°C.

Die in den Tabellen angegebenen prozentualen Anteile der einzelnen Chemikalien in den Schichten sind Gewichtsprozent-Angaben.

Beispiel 11: Preliner-Folie, 5-Schicht Blasextrusion, 140 $\mu$m, asymmetrisch

| Schichtnummer | Schicht | Zusammensetzung | Anteil in Schicht in % | Dicke in $\mu$m |
|---|---|---|---|---|
| 1 | (b) | • Lupolen 2420 F<br>• Exceed 1327 CA | • 70<br>• 30 | 30 |
| 2 | (b) | • Lupolen 2420 F<br>• Exceed 1327 CA | • 70<br>• 30 | 30 |
| 3 | (d) | • Admer AT1955E | • 100 | 10 |
| 4 | (c) | • Pearlthane 16N85 UV | • 100 | 30 |
| 5 | (a) | • Durethan C38 F | • 100 | 40 |
| | | | | Gesamtdicke: 140 $\mu$m |

## Prüfverfahren und -geräte

Zur Bestimmung der Dehnbarkeit der zwei Vergleichsbeispiel-Folien V1 und V2 sowie der erfindungsgemäßen Mehrschichtfolie in Form einer Schlauchfolie (B11) wurden Aufblastests durchgeführt. Ist eine zu testende Mehrschichtfolie keine Schlauchfolie, sondern z.B. eine Flachfolie, wird diese zu einem Schlauch versiegelt, um anschließend dessen Dehnbarkeit zu bestimmen. Die Versuche im Rahmen der Erfindung wurden an Schlauchfolien durchgeführt.

Zur Vorbereitung wurde (ein 5 m langer Schlauch oder) eine 5 m lange Schlauchfolie, die einen Schlauchumfang von 1175 mm bis 1180 mm aufwies, an beiden Enden durch zwei Metallscheiben mit einem geeigneten Durchmesser luftdicht verschlossen. Um die Luftdichtigkeit zu erreichen, wurden - wie es gängige Praxis bei solchen Aufblastests ist - Spanngurte und handelsübliches Gewebeklebeband verwendet. Durch ein Ventil in einem der beiden Metallscheiben wurde Druckluft in die Schlauchfolie geleitet, bis diese platzte. Vor dem Platzen waren Schichtabrisse von innenliegenden Folienschichten erkennbar, die als "Spleiß" (Engl.: splice) bezeichnet werden.

Hieraus bildete sich eine nur lokal auftretende Blase in der Mehrschichtfolie, welche dann bei weiterem Aufblasen zu einem Folienriss und einem Platzen der Schlauchfolie führte. Die maximale Dehnung (Angabe in Prozent) wurde ermittelt, indem der bis zum Platzen erzielte Außenumfang der Schlauchfolie an ihrer größten Stelle gemessen und mit dem anfänglichen Schlauchdurchmesser verglichen wurde, wobei folgende Formel verwendet wurde:

$$\textit{Maximale Dehnbarkeit} = [(\textit{Schlauchdurchmesser nach Aufblasen / an-}$$

$$\textit{fänglicher Schlauchdurchmesser vor dem Aufblasen}) - 1] \cdot 100$$

Die gleiche Formel gilt für den "Folienspleiß", d.h. dem ersten bemerkbaren Abriss einer Schicht der Schlauchfolie (ohne dass der gesamte Schlauch davon betroffen ist):

$$\textit{„Spleiß" = [(\textit{Schlauchdurchmesser nach Aufblasen und erstem er-}}$$

$$\textit{kennbaren Schichtabriss / anfänglicher Schlauchdurchmesser vor}$$

$$\textit{dem Aufblasen}) - 1] \cdot 100$$

Für die weiteren Prüfungen wurden die Folien 24 Stunden im Normklima gelagert.

Als Prüfgerät für die Zugversuche (Reißeigenschaften, Elastizitätsmodul, etc.) sowie die Weiterreißversuche wurde eine Universalprüfmaschine 281813 der Fa. Frank verwendet, wobei die Kraft der Kraftmessdose 200 N betrug. Die Prüfgeschwindigkeit betrug 300 mm/min, wobei 15 mm breite Streifen für den Zugversuch verwendet wurden.

Als Prüfgerät für die Gleitreibung wurde ein BETEX Slipping Tester RK2 verwendet mit einer Kraftmessdose von 10 N. Es kam ein LINSEIS L120 E Schreiber zum Einsatz. Zwei Folienstücke wurden mit einem Gewicht (1,96 N) belastet, übereinander gezogen und die dazu notwendige Kraft gemessen.

Als Prüfgerät für die Siegelnahtfestigkeit wurde gleichfalls die besagte Universalprüfmaschine 281813 der Fa. Frank mit einer Kraftmessdose von 200 N verwendet. Die Prüfgeschwindigkeit wurde auf 100 mm/min eingestellt. 15 mm breite Streifen wurden mittels eines Labor-Siegelgeräts SGPE 20 der Fa. Kopp mit einer Siegelbackenbreite von 10 mm plan gesiegelt. Die Siegelzeit betrug 1 sec, die Siegeltemperatur 130°C und der Siegeldruck 300 N/m$^2$.

**Messergebnisse**

I. Dehnbarkeit

Die Ergebnisse aus den Aufblastests sind in der folgenden Tabelle zusammengefasst:

| Beispiel/ Vergleichsbeispiel | Spleiß [%] | Dehnbarkeit [%] bis zum Platzen |
|:---:|:---:|:---:|
| **B11** | 27,5 | 126,6 |
| **V1** | 5,9 | 25,2 |
| **V2** | - | 45,7 |

Die Aufblastests zur Bestimmung der Dehnbarkeit zeigen, dass die Folie aus dem Vergleichsbeispiel V1 nur eine sehr geringe Dehnung von 5,9 % bis zum Spleiß bzw. 25,2 % bis zum Platzen der Folie besitzt. Dadurch ist der Einsatz dieser Folie als Preliner im Rahmen des Schlauchlining-Verfahrens bei der grabenlosen Kanalsanierung oder auch als Schlauchinnenfolie bei Schlauchlinern kaum geeignet. Zwar sind die mechanischen Eigenschaften der Folie aus Vergleichsbeispiel 1 in Bezug auf Weiterreißfestigkeit bzw. Durchstoßfestigkeit sehr gut, doch geht dies einher mit einer mangelnden Dehnfähigkeit, wodurch sich die Folien für die Verwendung in der grabenlosen Kanalsanierung nur bedingt eignen.

Die Folie aus Vergleichsbeispiel V2, eine LDPE-Monofolie in Schlauchform, zeigt keinen Spleiß im eigentlichen Sinn, da ja nur eine Schicht vorliegt. Diese Schicht zerplatzt bei einer Dehnung von 45,7 % und zeigt, dass die mechanischen Eigenschaften völlig unzureichend sind und der angelegten Druckluft nur sehr wenig Widerstand entgegen gesetzt werden kann. Diese Folie besitzt kaum mechanische Festigkeit und kann problemlos eingerissen werden. Für die Verwendung als Preliner oder als Schlauchinnenfolie ist die Folie damit ungenügend.

Die erfindungsgemäße Folie des Beispiels B11 hingegen besitzt einerseits sehr gute Werte für die Weiterreißfestigkeit und Durchstoßfestigkeit (auch wenn die entsprechenden Werte der Folie aus dem Vergleichsbeispiel V1 nicht erreicht werden), und andererseits eine sehr hohe Dehnbarkeit bis zum Folienspleiß bzw. bis zum Zerplatzen der Folie. Diese vorteilhaften Eigenschaften sind insbesondere darin begründet, dass die Folie B11 mindestens eine Polyamid-enthaltende Schicht aufweist und eine Schicht mit einem thermoplastischen Elastomer TPE.

Besonders hohe Dehnwerte bis zum Spleiß bzw. bis zum Zerplatzen der Folie werden erreicht durch die Verwendung von TPE (vorliegend ein thermoplastisches Polyurethan TPU) auf Basis von Ester- oder Ether-Weichsegmenten in einer oder mehreren Schichten (Beispiel B11).

Die Dehnung bis zum Bruch bzw. bis zum Platzen der Folien beläuft sich bei einer erfindungsgemäßen Folie aus dem Beispiel B11 auf über 80 % und sogar auf weit über 100 %.

Die erfindungsgemäße Verwendung von Polyamid sorgt nicht nur für eine Erhöhung der mechanischen Festigkeiten der Folien wie Ein- und Weiterreißfestigkeit, sondern realisiert auch eine Barrierefunktion gegenüber Ölen und Monomeren aus den Harzen, mit denen das Trägermaterial beim Schlauchlining-Verfahren getränkt ist. Dies schützt das Harz vor dem Austrocknen.

Im Folgenden sind die Messergebnisse zum Elastizitätsmodul (auch: E-Modul, Zugmodul, Elastizitätskoeffizient oder Youngscher Modul) aufgelistet. Der Elastizitätsmodul beschreibt den Zusammenhang zwischen Spannung und Dehnung bei der Verformung eines festen Körpers bei linear elastischem Verhalten.

| Beispiel/ Vergleichsbeispiel | E-Modul in $N/mm^2$ md (machine direction) | E-Modul in $N/mm^2$ cd (cross direction) |
|---|---|---|
| **B11** | 105 | 106 |
| **V1** | 296 | 307 |
| **V2** | 110 | 115 |

Der E-Modul einer Folie gibt an, wie steif oder wie flexibel eine Folie ist. Je größer der E-Modul einer Folie ist, umso steifer ist die Folie. Die hohe Steifigkeit bzw. die damit verbundene geringere Flexibilität der Folie geht einher mit einer deutlich verringerten Fähigkeit der Folie, sich umstülpen zu lassen. Doch gerade das Umstülpen ist bei einer Folie besonders gefragt, wenn es um deren Einsatz als Preliner bei der grabenlosen Kanalsanierung geht, d.h. wenn der Preliner mit dem Schlauchliner in den Kanal inversiert wird oder wenn der Preliner schon vorher eingestülpt wird.

Eine deutliche Verringerung der E-Module ergibt sich durch den Einsatz von thermoplastischen Elastomeren (TPE).

Beispiel B11 ist eine Folie bestehend aus Polyolefin, Haftvermittler, TPU (Polyether-basiert) und Polyamid. Der E-Modul ist mit einem Wert von ca. 105 $N/mm^2$ vergleichbar mit reinem LDPE (siehe Vergleichsbeispiel V2: ca. 112 $N/mm^2$) und liegt auf niedrigem Niveau. Damit kann der prinzipiellen Erhöhung des E-Moduls, die bei den erfindungsgemäßen Folien durch die Polyamid-enthaltende Schicht erfolgt, entgegengesteuert werden, indem ein TPE als weiteres Material in einer weiteren Schicht eingebracht wird.

Das bisher als Preliner verwendete Produkt aus Vergleichsbeispiel V1 weist hingegen einen deutlich höheren E-Modul auf. Im Vergleich zu der erfindungsgemäßen Folie aus dem Beispiel B11 liegt der E-Modul bei einer 108 μm dicken Valeron-Folie um den Faktor ca. 3 höher. Somit ist die Folie aus Vergleichsbeispiel V1 deutlich schlechter umstülpbar bzw. zu inversieren als die erfindungsgemäßen Folien aus dem Beispiel B11.

II. Reibung

Im Folgenden sind die Ergebnisse zu den Reibungseigenschaften wiedergegeben. Die Bestimmung der Reibungseigenschaften ist eine Grundeigenschaft von Folien und Verpackungen. Der Reibungskoeffizient (Haftreibung/Gleitreibung) wurde nach DIN EN ISO 8295 bestimmt und wird auch Haftreibungszahl oder Gleitreibungszahl genannt. Weiterhin sollte die Oberfläche der Reibungspartner berücksichtigt werden, um festzulegen, ob eine Reibungsprüfung Metall gegen Folienoberfläche oder Folienoberfläche gegen Folienoberfläche sinnvoll ist. Die Reibungszahl ist ein Quotient aus Reibungskraft und Auflagekraft des Schlittens und somit dimensionslos. Aufgrund des genormten Schlittengewichtes von 200 g ist die eigentliche Reibungskraft rund doppelt so groß wie die Reibungszahl.

| Beispiel/ Vergleichsbeispiel | Gleitreibung Seite 1 gegen Seite 1 (Material) | Gleitreibung Seite 2 gegen Seite 2 (Material) | Folienaufbau |
|---|---|---|---|
| **B11** | 0,11 (PE) | 0,22 (PA) | asymmetrisch |
| **V1** | 0,29 (HDPE) | 0,33 (HDPE) | symmetrisch |
| **V2** | 0,12 (LDPE) | 0,11 (LDPE) | symmetrisch |

Wie im Detail aus der Tabelle ersichtlich, können die erfindungsgemäßen Folien aus dem Beispiel B11 so eingestellt werden, dass deren Reibungskoeffizienten besonders niedrig sind. Bei dem Beispiel B11 ist ein Bereich von ca. 0,11 bzw. 0,22 erzielt worden. Die Folie aus Vergleichsbeispiel V1 weist hingegen mit einem mittleren Reibungskoeffizienten von 0,31 einen höheren Wert auf. Die Folie aus Vergleichsbeispiel V2 hat einen niedrigen Reibungskoeffizienten von 0,12.

Wie dem Fachmann bekannt ist, gibt es eine Reihe von Additiven, deren Einsatz den Reibungskoeffizienten weiter verringert. Deren Wirkung ist beim Vergleichsbeispiel V1 aufgrund des Herstellungsprozesses dieser Folie hingegen sehr eingeschränkt.

III. Siegelnahtfestigkeit

Die Vergleichsfolie V1 liegt nur als Flachfolie vor und muss zum Schlauch gesiegelt werden, wobei eine Siegelnahtfestigkeit von 3,2 bis 10,5 N/15 mm erhalten wurde. Bei den genannten Siegelbedingungen weist die Folie aus Vergleichsbeispiel V1 demnach nur eine sehr schlechte Siegelfähigkeit auf. Da sie herstellungsbedingt nur als Flachfolie vorliegt, erfolgt die Verschweißung zu der für die Anwendung erforderlichen Schlauchform mittels Hotmelt-Klebstoffen. Die Siegelfähigkeit dieser Vergleichsfolie V1 ist viel zu gering, um bei dem resultierenden Schlauch eine Siegelnaht mit hoher Festigkeit zu gewährleisten. Auch der Einsatz von Hotmelt-Klebstoffen zum generellen Siegeln ist hier sehr kritisch, da grundsätzlich ein Problem der Haftung zwischen Hotmelt-Klebstoff und der Folie besteht. Bei Prelinern oder bei Schlauchinnenfolien ist eine hohe Siegelnahtfestigkeit von besonderer Wichtigkeit, um das Eindringen von Wasser (Preliner) oder das Ausdampfen von Harz (Schlauchinnenfolie) zu vermeiden. Die Folie aus dem Vergleichsbeispiel V1 weist diesbezüglich ein hohes Risiko in der Anwendung auf.

Wegen des Vorgesagten empfiehlt sich generell der Einsatz eines Schlauchs, erhalten durch Extrusion, da es dann keine Schwachstelle in Form einer Siegelnaht gibt. Die erfindungsgemäßen Folien weisen bevorzugt keine Siegelnaht auf, wodurch diese Folien keine "Schwachstelle" mehr aufweisen. Der Folienschlauch der erfindungsgemäßen Folie aus dem Beispiel B11 ist demnach völlig homogen und hält auch größten Belastungen Stand. Es ist eine höchste Barrierefunktion gegen Wasser oder gegen Monomere aus den Harzen gewährleistet.

Bei der in Schlauchform vorliegenden Vergleichsfolie V2 lag die Siegelnahtfestigkeit oberhalb von 30 N/15 mm; wegen der Schlauchform ist allerdings eine Siegelung zum Schlauch prinzipiell nicht erforderlich. Doch selbst wenn die Folie als Flachfolie vorliegt, kann die Folie aus V2 ohne Probleme zu einem Schlauch gesiegelt bzw. geschweißt werden.

Soll die erfindungsgemäße Folie B11, die bevorzugt in Schlauchform vorliegt, zunächst jedoch als Flachfolie hergestellt werden, wird bevorzugt deren Polyolefin-Seite gesiegelt. Bei dieser Beispielfolie B11 war die Siegelnahtfestigkeit, wie bei der Vergleichsfolie V2, ebenfalls weitaus größer als 30 N/15 mm, so dass diese Folien absolut fest und dicht sind.

Zusammenfassung der Messergebnisse

Die folgende Tabelle zeigt abschließend die Vorteile der erfindungsgemäßen Folie aus dem Beispiel B11 mit der bisher im Stand der Technik verwendeten Folie aus dem Vergleichsbeispiel V1 in Bezug auf die für die Anwendung relevanten Eigenschaften.

| Name | Eigenschaft - relevant zur Verwendung als Preliner/Schlauchinnenfolie | | | | | | | |
|---|---|---|---|---|---|---|---|---|
| | Schlauchform | Siegelfähigkeit | Barriere, Dichtheit | WRF | DSF | Dehnfähigkeit | Flexibilität, Umstülpbarkeit | COF |
| B11 | ++ | ++ | ++ | + | + | ++ | ++ | 0/+ |
| V1 | 0 | - | -/0 | ++ | ++ | - | 0 | 0 |
| V2 | ++ | ++ | - | - | - | -/0 | ++ | 0/+ |

Legende:
- : unzureichende Werte
0: für die Anwendung ausreichend
+: für die Anwendung gut geeignet
++: für die Anwendung besonders gut geeignet
WRF: Weiterreißfestigkeit
DSF: Durchstoßfestigkeit
COF: Reibwert (Coefficient of Friction)

Aus der Tabelle geht hervor, dass sich die Eigenschaften der erfindungsgemäßen Folie aus dem Beispiel B11 von den Folien aus den Vergleichsbeispielen V1 und V2 in Bezug auf deren Eignung als Preliner, Wasserschutzfolie, Gleitfolie, Kalibrierfolie oder erfindungsgemäß als Schlauchinnenfolie im Rahmen des Schlauchlining-Verfahrens bei der grabenlosen Kanalsanierung deutlich hervorheben. Die erfindungsgemäßen Folien stellen damit eine deutliche Verbesserung gegenüber den Folien aus den Vergleichsbeispielen.

**Patentansprüche**

1.   Einlegeschlauch für die grabenlose Kanalsanierung mittels Schlauchlining-Verfahren, umfassend eine Schlauchinnenfolie in Form einer Mehrschichtfolie, eine als Schlauchfolie ausgebildete Außenfolie, die vorteilhafterweise UV-Strahlung absorbiert und/oder reflektiert und die zur Anlage an einem Preliner bzw. einer Gleitfolie vorgesehen ist, sowie ein zwischen diesen beiden Schlauchfolien angeordnetes und mit einem reaktiven Kunststoffharz getränktes Trägermaterial, z. B. Glasfasergewebe, Filze, Vliese, Textilien, das nach der Aushärtung das sanierte Kanalinnenrohr bildet, **dadurch gekennzeichnet, dass** die Schlauchinnenfolie mindestens eine Schicht (a), welche mindestens ein Homo- oder Copolyamid mit einem prozentualen Gewichtsanteil von mehr als 25 Gew.-% enthält, vorzugsweise als Außenschicht, mindestens eine Schicht (c) enthaltend mindestens ein thermoplastisches Elastomer (TPE) sowie mindestens eine weitere Schicht (b) aufweist, wobei diese weitere Schicht (b) mindestens ein thermoplastisches, gegebenenfalls modifiziertes, Olefin-Homo- oder Copolymer enthält.

2.   Einlegeschlauch nach Anspruch 1, **dadurch gekennzeichnet, dass** die mindestens eine Schicht (a) mehr als 50 Gew.-%, vorzugsweise mehr als 75 Gew.-%, bevorzugt mehr als 95 Gew.-% und ganz besonders bevorzugt im Wesentlichen 100 Gew.-% Homo- oder Copolyamid enthält.

3.   Einlegeschlauch nach Anspruch 1 oder 2, **dadurch gekennzeichnet, dass** die mindestens eine Schicht (b) mehr als 20 Gew.-%, vorzugsweise mehr als 40 Gew.-% und bis zu 100 Gew.-% thermoplastisches Olefin-Homo- oder Copolymer enthält.

4.   Einlegeschlauch nach einem oder mehreren der vorhergehenden Ansprüche, **dadurch gekennzeichnet, dass** die mindestens eine Schicht (c) mehr als 20 Gew.-%, vorzugsweise mehr als 40 Gew.-% und bis zu 100 Gew.-% thermoplastisches Elastomer (TPE) enthält.

5.   Einlegeschlauch nach einem oder mehreren der vorhergehenden Ansprüche, **dadurch gekennzeichnet, dass** das mindestens eine thermoplastische Elastomer (TPE) in der mindestens einen Schicht (c) aus der folgenden Gruppe ausgewählt ist, die folgende Mitglieder umfasst:

   a) TPE-U bzw. TPU, d.h. thermoplastische Elastomere auf Urethanbasis;
   b) TPE-O bzw. TPO, d.h. thermoplastische Elastomere auf Olefinbasis, vorwiegend PP/EPDM;
   c) TPE-V bzw TPV, d.h. vernetzte thermoplastische Elastomere auf Olefinbasis, vorwiegend PP/EPDM;
   d) TPE-E bzw. TPC, d.h. thermoplastische Polyesterelastomere / thermoplastische Copolyester;
   e) TPE-S bzw. TPS, d.h. Styrol-Blockcopolymere (SBS, SEBS, SEPS, SEEPS und MBS);
   f) TPE-A bzw. TPA, d.h. thermoplastische Copolyamide;
   g) TPE-Silikon.

6.   Einlegeschlauch nach einem oder mehreren der vorhergehenden Ansprüche, **dadurch gekennzeichnet, dass** die Schlauchinnenfolie mindestens eine weitere als Haftvermittlerschicht (d) ausgebildete Schicht aufweist, welche vorzugsweise ein Olefin-Homo- oder Copolymer enthält, wobei die Haftvermittlerschicht (d) zwischen zwei Schichten (a), zwischen einer Schicht (a) und einer Schicht (b) nach Anspruch 3, zwischen zwei Schichten (b) nach Anspruch 3, zwischen einer Schicht (a) und einer Schicht (c), zwischen einer Schicht (b) nach Anspruch 3 und einer Schicht (c), oder zwischen zwei Schichten (c) angeordnet ist.

7.   Einlegeschlauch nach einem oder mehreren der vorhergehenden Ansprüche, **dadurch gekennzeichnet, dass** beide Außenschichten der Schlauchinnenfolie als Schicht (a) ausgebildet sind, welche mindestens ein Homo- oder Copolyamid mit einem prozentualen Gewichtsanteil von mehr als 25 Gew.-% enthalten.

8.   Einlegeschlauch nach einem oder mehreren der vorherigen Ansprüche, **dadurch gekennzeichnet, dass** die Schlauchinnenfolie eine Dicke von 20 bis 2000 $\mu$m, vorzugsweise von 40 bis 1000 $\mu$m, besonders bevorzugt von 60 bis 400 $\mu$m, insbesondere von 80 bis 250 $\mu$m aufweist.

**9.** Einlegeschlauch nach einem oder mehreren der vorhergehenden Ansprüche, **dadurch gekennzeichnet, dass** in der mindestens einen Schicht (b) nach Anspruch 3, die ein Olefin-Homo- oder Copolymer enthält, oder in einer Haftvermittlerschicht (d) mindestens ein Ethylen-(Meth)Acrylat-Copolymer, in funktionalisierter oder nicht-funktionalisierter Form, enthalten ist, wobei der prozentuale Gewichtsanteil des mindestens einen Ethylen-(Meth)Acrylat-Copolymers in mindestens einer der Schichten (b) bzw. (d) vorzugsweise im Bereich von 0,1 bis 100% liegt, vorzugsweise bei mindestens 30 Gew.-%.

**10.** Einlegeschlauch nach einem oder mehreren der vorherigen Ansprüche, **dadurch gekennzeichnet, dass** einer oder mehrere der folgenden Stoffe in mindestens einer der Folienschichten der Schlauchinnenfolie enthalten sind: Polystyrol (PS); Polyhalogenide, wie z. B. PVC und/oder Polyvinylidenchlorid (PVdC); Ethylenvinylalkohol-Copolymer (EVOH), Polyvinylalkohol (PVOH oder PVAL), Haftvermittler, Ethylenvinylacetat (EVAc); ein oder mehrere Ionomere; ein oder mehrere Poly(Meth)acrylate; Ethylen-haltige Poly(meth)acrylate, Polyvinylacetat (PVAc); Polycarbonat (PC); Polyacrylnitril (PAN); weitere Polyester wie Polybutylenterephthalat (PBT), Polyethylennaphthalat (PEN), Polymilchsäure (PLA) und/oder Polyhydroxyalkanoate (PHA); ein oder mehrere Ethylenacrylsäure-Copolymere (EAA); Polyvinylbutyral (PVB); Polyvinylacetal; Celluloseacetat (CA); Celloloseacetobutyrat (CAB); Polysaccharide; Stärke; zyklisches Olefin-Copolymer (COC).

**11.** Einlegeschlauch nach einem oder mehreren der vorherigen Ansprüche, **dadurch gekennzeichnet, dass** im Zuge der Extrusion der Schlauchinnenfolie in einer oder in mehrerer ihrer Schichten folgende Stoffe zugegeben worden sind: Haftvermittler, funktionalisiertes Polymer wie z. B. EVOH, optische Aufheller, thermische Stabilisatoren, Gleitmittel, Antioxidantien, Oxygen scavenger, Abstandshalter (z. B. Silica-Partikel, SAS), Slip-/Antiblockmittel, Farben, Pigmente, Schäumungsmittel, Antistatika, Prozesshilfsmittel, Lubricating Agents, Flammschutzmittel, Flammhemmer, Impact Modifier, Schlagzähverbesserer, Anti-Hydrolysemittel, UV-Absorber, UV-Schutzmittel, Stabilisatoren, Antifog-Additive, Wachse, Wachsadditive, Trennmittel, Siegel- oder Peel-Additive, Nukleierungsmittel, Combatibilizer (Verträglichkeitsmacher), Fließmittel, Fließverbesserer, Melt Strength Enhancer, Molekulargewichtserhöher, Vernetzer oder Weichmacher.

**12.** Einlegeschlauch nach einem oder mehreren der vorherigen Ansprüche, **dadurch gekennzeichnet, dass** die Schlauchinnenfolie mit einem Non-Woven-Material, Textil, Nadelfilz, Synthesefasern oder Vlies kaschiert ist.

**13.** Verwendung eines Einlegeschlauchs nach einem oder mehreren der vorhergehenden Ansprüche bei der grabenlosen Kanalsanierung.

**Claims**

**1.** Insertion tube for trenchless sewer pipe rehabilitation by means of a pipe lining method, comprising an inner tube film in the form of a multilayer film, an outer film in the form of a tube film, which advantageously absorbs and/or reflects UV radiation and which is provided for contact with a preliner or a sliding film, as well as a carrier material, e.g. glass fibre fabric, felts, fleeces, textiles, arranged between these two tube films and impregnated with a reactive plastic resin which forms the rehabilitated inner sewer pipe after curing, **characterised in that** the inner tubular film contains at least one layer (a), which contains at least one homo- or copolyamide with a percentage by weight of more than 25 wt.%, preferably as an outer layer, at least one layer (c) containing at least one thermoplastic elastomer (TPE) and at least one further layer (b), this further layer (b) containing at least one thermoplastic, optionally modified, olefin homo- or copolymer.

**2.** Insertion tube according to claim 1, **characterized in that** the at least one layer (a) contains more than 50% by weight, preferably more than 75% by weight, preferably more than 95% by weight and very particularly preferably essentially 100% by weight of homo- or copolyamide.

**3.** Insertion tube according to claim 1 or 2, **characterized in that** the at least one layer (b) contains more than 20% by weight, preferably more than 40% by weight and up to 100% by weight of thermoplastic olefin homo- or copolymer.

**4.** Insertion tube according to one or more of the preceding claims, **characterized in that** the at least one layer (c) contains more than 20% by weight, preferably more than 40% by weight and up to 100% by weight of thermoplastic elastomer (TPE).

**5.** Insertion tube according to one or more of the preceding claims, **characterized in that** the at least one thermoplastic elastomer (TPE) in the at least one layer (c) is selected from the following group comprising the following members:

> a) TPE-U or TPU, i.e. urethane-based thermoplastic elastomers;
> b) TPE-O or TPO, i.e. olefin-based thermoplastic elastomers, predominantly PP/EPDM;
> c) TPE-V or TPV, i.e. cross-linked olefin-based thermoplastic elastomers, predominantly PP/EPDM;
> d) TPE-E or TPC, i.e. thermoplastic polyester elastomers / thermoplastic copolyesters;
> e) TPE-S or TPS, i.e. styrene block copolymers (SBS, SEBS, SEPS, SEEPS and MBS);
> f) TPE-A or TPA, i.e. thermoplastic copolyamides;
> g) TPE silicone.

6. Insertion tube according to one or more of the preceding claims, **characterized in that** the inner tube film has at least one further layer formed as an adhesion promoter layer (d), which preferably contains an olefin homopolymer or copolymer, the adhesion promoter layer (d) being between two layers (a), between a layer (a) and a layer (b) according to claim 3, between two layers (b) according to claim 3, between a layer (a) and a layer (c), between a layer (b) according to claim 3 and a layer (c), or between two layers (c).

7. Insertion tube according to one or more of the preceding claims, **characterized in that** both outer layers of the inner tube film are formed as layer (a), which contain at least one homo- or copolyamide with a percentage by weight of more than 25%.

8. Insertion tube according to one or more of the preceding claims, **characterized in that** the inner tube film has a thickness of from 20 to 2000 μm, preferably from 40 to 1000 μm, more preferably from 60 to 400 μm, in particular from 80 to 250 μm.

9. Insertion tube according to one or more of the preceding claims, **characterized in that** at least one ethylene (meth)acrylate copolymer, in functionalized or non-functionalized form, is present in the at least one layer (b) according to claim 3, which contains an olefin homo- or copolymer, or in an adhesion promoter layer (d), wherein the percentage by weight of the at least one ethylene (meth)acrylate copolymer in at least one of the layers (b) or (d) preferably lies in the range from 0.1 to 100%, preferably at at least 30% by weight.

10. Insertion tube according to one or more of the preceding claims, **characterized in that** one or more of the following substances are present in at least one of the film layers of the inner tube film: Polystyrene (PS); Polyhalides, such as PVC and/or polyvinylidene chloride (PVdC); ethylene vinyl alcohol copolymer (EVOH), polyvinyl alcohol (PVOH or PVAL), adhesion promoter, ethylene vinyl acetate (EVAc); one or more ionomers; one or more poly(meth)acrylates; ethylene-containing poly(meth)acrylates, polyvinyl acetate (PVAc); polycarbonate (PC); polyacrylonitrile (PAN); other polyesters such as polybutylene terephthalate (PBT), polyethylene naphthalate (PEN), polylactic acid (PLA) and/or polyhydroxyalkanoates (PHA); one or more ethylene acrylic acid copolymers (EAA); polyvinyl butyral (PVB); polyvinyl acetal; cellulose acetate (CA); cellulose acetobutyrate (CAB); polysaccharides; starch; cyclic olefin copolymer (COC).

11. Insertion tube according to one or more of the preceding claims, **characterized in that** the following substances have been added in the course of extrusion of the inner tube film in one or more of its layers: Adhesion promoters, functionalised polymer such as EVOH, optical brighteners, thermal stabilisers, lubricants, antioxidants, oxygen scavengers, spacers (e.g. (e.g. silica particles, SAS), slip/antiblock agents, inks, pigments, foaming agents, antistatic agents, processing aids, lubricating agents, flame retardants, flame suppressors, impact modifiers, impact resistance enhancers, anti-hydrolysis agents, UV absorbers, UV protection agents, stabilisers, antifog additives, waxes, wax additives, release agents, sealing or peel additives, nucleating agents, compatibilisers, flow agents, flow improvers, melt strength enhancers, molecular weight enhancers, crosslinkers or plasticisers.

12. Insertion tube according to one or more of the preceding claims, **characterized in that** the inner tube film is laminated with a non-woven material, textile, needle felt, synthetic fibres or non-woven.

13. Use of an insertion tube according to one or more of the preceding claims in trenchless sewer pipe rehabilitation.

**Revendications**

1. Tuyau de chemisage pour la réhabilitation sans tranchée de canalisations au moyen d'un procédé de gainage de tuyaux, comprenant une feuille tubulaire intérieure sous la forme d'une feuille multicouche, une feuille extérieure se présentant sous la forme d'une feuille extrudée en gaine, qui absorbe et/ou réfléchit avantageusement le rayonnement UV et qui est prévue pour la mise en contact avec une pré-gaine ou une feuille glissante, ainsi qu'un un substrat, par exemple un tissu de fibres de verre, des feutres, des non-tissés, des textiles, disposé entre ces deux feuilles extrudées en gaine et imprégné d'une résine synthétique réactive, qui, après le durcissement, forme le tuyau intérieur de canalisation réhabilité, **caractérisé en ce que** la feuille tubulaire intérieure contient au moins une couche (a) qui contient au moins un homopolyamide ou un copolyamide avec une part de poids en pour cent de plus de 25 % en poids, de préférence en tant que couche extérieure, au moins une couche (c) contenant au moins un élastomère thermoplastique (TPE) ainsi qu'au moins une couche (b) supplémentaire, dans lequel cette couche (b) supplémentaire contient au moins un homopolymère ou copolymère d'oléfine thermoplastique, éventuellement modifié.

2.  Tuyau de chemisage selon la revendication 1, **caractérisé en ce que** la, au moins une, couche (a) contient plus de 50 % en poids, de préférence plus de 75 % en poids, de manière plus préférée plus de 95 % en poids et, de manière tout particulièrement préférée, sensiblement 100 % en poids d'homopolyamide ou de copolyamide.

3.  Tuyau de chemisage selon la revendication 1 ou 2, **caractérisé en ce que** la, au moins une, couche (b) contient plus de 20 % en poids, de préférence plus de 40 % en poids et jusqu'à 100 % en poids d'homopolymère ou de copolymère d'oléfine thermoplastique.

4.  Tuyau de chemisage selon l'une quelconque ou plusieurs des revendications précédentes, **caractérisé en ce que** la, au moins une, couche (c) contient plus de 20 % en poids, de préférence plus de 40 % en poids et jusqu'à 100 % en poids d'élastomère thermoplastique (TPE).

5.  Tuyau de chemisage selon l'une quelconque ou plusieurs des revendications précédentes, **caractérisé en ce que** l'au moins un élastomère thermoplastique (TPE) dans la, au moins une, couche (c) est sélectionné dans le groupe suivant, qui comprend les membres suivants :

    a) TPE-U ou TPU, c'est-à-dire des élastomères thermoplastiques à base d'uréthane ;
    b) TPE-O ou TPO, c'est-à-dire des élastomères thermoplastiques à base d'oléfine, principalement PP/EPDM ;
    c) TPE-V ou TPV, c'est-à-dire des élastomères thermoplastiques réticulés à base d'oléfine, principalement PP/EPDM ;
    d) TPE-E ou TPC, c'est-à-dire des élastomères de polyester thermoplastiques/copolyesters thermoplastiques ;
    e) TPE-S ou TPS, c'est-à-dire des copolymères séquencés de styrène (SBS, SEBS, SEPS, SEEPS et MBS) ;
    f) TPE-A ou TPA, c'est-à-dire des copolyamides thermoplastiques ;
    g) silicone de TPE.

6.  Tuyau de chemisage selon l'une quelconque ou plusieurs des revendications précédentes, **caractérisé en ce que** la feuille tubulaire intérieure présente au moins une couche supplémentaire se présentant sous la forme d'une couche de promoteur d'adhérence (d), qui contient de préférence un homopolymère ou copolymère d'oléfine, la couche de promoteur d'adhérence (d) étant disposée entre deux couches (a), entre une couche (a) et une couche (b) selon la revendication 3, entre deux couches (b) selon la revendication 3, entre une couche (a) et une couche (c), entre une couche (b) selon la revendication 3 et une couche (c) ou entre deux couches (c).

7.  Tuyau de chemisage selon l'une quelconque ou plusieurs des revendications précédentes, **caractérisé en ce que** les deux couches extérieures de la feuille tubulaire intérieure se présentent sous la forme d'une couche (a), qui contiennent au moins un homopolyamide ou un copolyamide avec une part de poids en pour cent de plus de 25 % en poids.

8.  Tuyau de chemisage selon l'une quelconque ou plusieurs des revendications précédentes, **caractérisé en ce que** la feuille tubulaire intérieure présente une épaisseur de 20 à 2 000 $\mu$m, de préférence de 40 à 1 000 $\mu$m, de manière particulièrement préférée de 60 à 400 $\mu$m, en particulier de 80 à 250 $\mu$m.

9.  Tuyau de chemisage selon l'une quelconque ou plusieurs des revendications précédentes, **caractérisé en ce qu'**au moins un copolymère d'éthylène-(méth)acrylate sous forme fonctionnalisée ou non fonctionnalisée est contenu dans la, au moins une, couche (b) selon la revendication 3, qui contient un homopolymère ou copolymère d'oléfine, ou dans une couche de promoteur d'adhérence (d), dans lequel la part de poids en pour cent de l'au moins un copolymère d'éthylène-(méth)acrylate dans au moins l'une des couches (b) ou (d) est de préférence dans la plage de 0,1 à 100 %, de préférence d'au moins 30 % en poids.

10. Tuyau de chemisage selon l'une quelconque ou plusieurs des revendications précédentes, **caractérisé en ce que** l'une ou plusieurs des substances suivantes est/sont contenue(s) dans au moins l'une des couches de feuille de la feuille tubulaire intérieure : polystyrène (PS) ; polyhalogénures, tels que, par ex., CPV et/ou chlorure de polyvinylidène (PVdC) ; copolymère éthylène-alcool vinylique (EVOH), alcool polyvinylique (PVOH ou PVAL), promoteur d'adhérence, éthylène-acétate de vinyle (EVAc) ; un ou plusieurs ionomères ; un ou plusieurs polyméthacrylates ; polyméthacrylates contenant de l'éthylène, acétate de polyvinyle (PVAc) ; polycarbonate (PC) ; polyacrylonitrile (PAN) ; d'autres polyesters tels que le téréphtalate de polybutylène (PBT), naphtalate de polyéthylène (PEN), l'acide polylactique (PLA) et/ou le polyhydroxyalkanoate (PHA) ; un ou plusieurs copolymères d'éthylène-acide acrylique (EAA) ; butyral de polyvinyle (PVB) ; acétal polyvinylique ; acétate de cellulose (CA) ; acétobutyrate de cellulose (CAB) ; polysaccharides ; amidon ; copolymère oléfinique cyclique (COC).

11. Tuyau de chemisage selon l'une quelconque ou plusieurs des revendications précédentes, **caractérisé en ce que**, lors de l'extrusion de la feuille tubulaire intérieure, les substances suivantes ont été ajoutées dans une ou plusieurs de ses couches : promoteurs d'adhérence, polymère fonctionnalisé tel que l'EVOH, azurants optiques, stabilisateurs thermiques, agents de glisse, antioxydants, désoxygénant, espaceurs (par ex. particules de silice, SAS), agents de glissement/anti-blocage, peintures, pigments, agents moussants, agents antistatiques, adjuvants de processus, agents lubrifiants, retardateurs de flamme, agents ignifuges, agents antichoc, améliorateur de résistance aux chocs, agents anti-hydrolyse, absorbant d'UV, agents de protection contre les UV, stabilisants, additifs antibuée, cires, additifs à base de cire, antiagglomérants, additifs d'étanchéité ou de pelage, agents de nucléation, compatibilisant (agent de compatibilité), agents fluidifiants, améliorateurs de fluidité, renforçateurs de la résistance à la fusion, agents d'augmentation du poids moléculaire, agents de réticulation ou plastifiants.

12. Tuyau de chemisage selon l'une quelconque ou plusieurs des revendications précédentes, **caractérisé en ce que** la feuille tubulaire intérieure est doublée d'une matière non tissée, d'un textile, de feutre aiguilleté, de fibres synthétiques ou d'un voile.

13. Utilisation d'un tuyau de chemisage selon l'une quelconque ou plusieurs des revendications précédentes dans la réhabilitation sans tranchée de canalisations.

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 2725277 A1
- DE 102010023764 A1

- EP 1145847 A1

**In der Beschreibung aufgeführte Nicht-Patentliteratur**

- **VON STEPHEN C. LAPIN.** Electron Beam Technology for Converting Applications. *Radtech Report,* 2009, vol. 23 (5), 44-47